# EUROPÄISCHE PATENTSCHRIFT

(11) **EP 1 584 507 B1**
(45) Veröffentlichungstag und Bekanntmachung des Hinweises auf die Patenterteilung: **06.06.2007**
(21) Anmeldenummer: 05006158.9
(22) Anmeldetag: 21.03.2005
(51) Int. Cl.: B60H 1/22, B60H 1/03

(54) **Brennerheizsystem für ein Fahrzeug**
Combustion heater system for a vehicle
Brûleur en tant que chauffage additionel pour véhicule

(30) Priorität: 08.04.2004 DE 102004017515
(43) Veröffentlichungstag der Anmeldung: 12.10.2005
(73) Patentinhaber: J. Eberspächer GmbH & Co. KG, 73730 Esslingen (DE)
(72) Erfinder: Alber, Andreas, 70619 Stuttgart (DE); Burner, Erwin, 73099 Adelberg (DE)
(74) Vertreter: Ruttensperger, Bernhard

(56) Entgegenhaltungen:
- EP-A- 0 780 252
- DE-A1- 19 523 905
- US-A- 5 752 655

## Beschreibung

Die vorliegende Erfindung betrifft ein Nachrüstheizsystem für ein Fahrzeug.

Eine Vielzahl der heutzutage verkauften bzw. auch in Betrieb befindlichen Kraftfahrzeuge nutzt die in einer Brennkraftmaschine im Betrieb derselben entstehende Abwärme zur Erwärmung anderer Fahrzeugbereiche, insbesondere zur Erwärmung der in den Fahrzeuginnenraum einzuleitenden Luft bei vergleichsweise niedriger Außentemperatur. Da hier also auch anderweitig nutzbare Wärme nur im Betrieb der Brennkraftmaschine zur Verfügung steht, besteht grundsätzlich nicht die Möglichkeit, der Vorwärmung des Fahrzeugs, also beispielsweise auch der Vorwärmung der Brennkraftmaschine oder des Fahrzeuginnenraums, bevor das Fahrzeug tatsächlich in Betrieb gesetzt werden soll, also die Brennkraftmaschine gestartet werden soll. Für derartige Fahrzeuge werden Nachrüstheizsysteme, im Allgemeinen auch Standheizungen genannt, bereitgestellt, die nachträglich in derartige Fahrzeuge eingebaut werden können. Derartige Nachrüstheizsysteme umfassen ein im Allgemeinen mit Brennstoff betriebenes Heizgerät, das unabhängig vom Betrieb der Brennkraftmaschine durch ein diesem zugeordnetes Ansteuergerät in Betrieb genommen werden kann. Die bei der Verbrennung in der Brenneranordnung eines derartigen Heizgeräts erzeugte Wärme wird in einer Wärmetauscheranordnung des Heizgeräts dann auf das Kühlmittel der Brennkraftmaschine übertragen. Die in diesem Kühlmittel dann transportierte Wärme kann einerseits dazu genutzt werden, die Brennkraftmaschine vorzuwärmen, kann andererseits auch dazu genutzt werden, in einem im Fahrzeug allgemein ohnehin vorhandenen Wärmetauscher Wärme auf die in den Fahrzeuginnenraum dann eingeleitete Luft zu übertragen und somit den Fahrzeuginnenraum vorzuwärmen.

Bei modernen Dieselaggregaten wird die bei der darin ablaufenden Verbrennung erzeugte Energie in einem so großen Anteil in kinetische Energie umgesetzt, das vor allem bei vergleichsweise niedrigen Außentemperaturen zumindest in der Startphase der Brennkraftmaschine nicht genügend Wärme bereitgestellt werden kann, um auch den Fahrzeuginnenraum ausreichend zu erwärmen. Deshalb und auch um derartige Aggregate möglichst schnell auf Betriebstemperatur zu bringen, ist es bekannt, so genannte Zuheizer vorzusehen. Diese Zuheizer werden beim Starten der Brennkraftmaschine, also eines derartigen Dieselaggregats, in Betrieb gesetzt und erzeugen durch Verbrennung Wärme, die dann beispielsweise auch auf das Kühlmittel der Brennkraftmaschine und über dieses auf die in den Fahrzeuginnenraum einzuleitende Luft einerseits und auf die Brennkraftmaschine andererseits übertragen werden kann. Derartige Zuheizer werden bereits beim Aufbau von Fahrzeugen zusammen mit der Brennkraftmaschine eingebaut.

Aus der US 5,752,655 ist ein Heizsystem mit einem brennstoffbetriebenen Heizgerät bekannt, das in ein mit Elektromotor ausgestattetes Fahrzeug oder in einen Reisebus oder dergleichen integriert werden kann. Bei diesem bekannten System ist vorgesehen, dass bei einmal aktiviertem brennstoffbetriebenen Heizgerät die Temperatur des in einem Wärmeträgermediumkreislauf zirkulierenden Wärmeträgers überwacht wird und dann, wenn eine bestimmte Grenztemperatur überschritten wird, bei weiterhin aktiviert gehaltenem Heizgerät Maßnahmen zum Kühlen des Wärmeträgermediums ergriffen werden. Auf diese Art und Weise wird eine Überhitzung des Wärmeträgermediumkreislaufs vermieden.

Es ist die Aufgabe der vorliegenden Erfindung, ein hinsichtlich seines Einsatzbereichs bzw. seiner Funktionalität erweitertes Nachrüstheizsystem für ein Fahrzeug bereitzustellen.

Erfindungsgemäß wird diese Aufgabe gelöst durch ein Nachrüstheizsystem für ein Fahrzeug, umfassend ein Heizgerät mit einer Brenneranordnung und einer Wärmetauscheranordnung, wobei die Wärmetauscheranordnung Anschlussbereiche zum Anschließen derselben an einen Kühlmittelkreislauf einer Brennkraftmaschine aufweist, ein Ansteuergerät für das Heizgerät, wenigstens eine Bedieneinheit, in welcher gemäß einer Benutzermanipulation Bedienbefehle generiert werden und welche zur Übertragung von Bedienbefehlen in Kontakt mit dem Ansteuergerät ist oder treten kann, wobei das Ansteuergerät dazu ausgebildet ist das Heizgerät auf Grundlage der Bedienbefehle als Standheizung zu betreiben, eine Sommerbetrieb/Winterbetrieb-Differenzieranordnung, welche dem Ansteuergerät zuführbare Sommerbetrieb/Winterbetrieb-Differenzierinformation bereitstellt, wobei das Ansteuergerät ferner dazu ausgebildet ist, dann, wenn die Sommerbetrieb/Winterbetrieb-Differenzierinformation auf Winterbetrieb hindeutet, das Heizgerät als Zuheizer zu betreiben, und dann, wenn die Sommerbetrieb/Winterbetrieb-Differenzierinformation auf Sommerbetrieb hindeutet, das Heizgerät nicht als Zuheizer zu betreiben.

Der Grundgedanke der vorliegenden Erfindung liegt darin, ein in einem Fahrzeug nachrüstbares Nachrüstheizsystem, also eine nachrüstbare Standheizung, so auszulegen, dass diese nicht nur als Standheizung betrieben werden kann, sondern eben auch als Zuheizer betrieben werden kann. D.h., es wird möglich, mit einem derartigen System nicht nur das Fahrzeug vorzukonditionieren, sofern ein Benutzer dies durch entsprechende Bedienung wünscht, sondern dann, wenn es beispielsweise im Winter vorteilhaft ist, auch eine Zuheizfunktion bereitzustellen, so dass unabhängig davon, ob der Benutzer zu einem bestimmten Zeitpunkt konkret den Betrieb des Heizgeräts vorgibt oder nicht, dieses in Betrieb gesetzt wird, um einerseits eine ausreichende Konditionierung oder verbesserte Konditionierung des Fahrzeuginnenraums zu erlangen, andererseits jedoch auch die Brennkraftmaschine schneller auf Betriebstemperatur zu bringen und somit auch die Schadstoffemission in der Startphase zu senken. Wesentlich für diese erweiterte Funktionalität ist jedoch, dass für das Ansteuergerät Information dahingehend bereitgestellt wird, ob denn tatsächlich ein Winterbetrieb mit zusätzlicher Zuheizerfunktion erfolgen soll, oder ob ein Sommerbetrieb durchgeführt werden soll, in dem diese Zuheizerfunktion grundsätzlich nicht erforderlich ist oder grundsätzlich vom Fahrer nicht gewünscht wird.

Um für das Ansteuergerät diese Information bereitstellen zu können, wird vorgeschlagen, dass die Sommerbetrieb/Winterbetrieb-Differenzieranordnung wenigstens eine Bedieneinheit als Sommerbetrieb/Winterbetrieb-Vorgabebedieneinheit umfasst, welche eine benutzermanipulierbare Sommerbetrieb/Winterbetrieb-Umschattanordnung aufweist und zum Erzeugen eines Sommerbetrieb-Betriebsbefehls und eines Winterbetrieb-Betriebsbefehls ausgebildet ist. Bei dieser Ausgestaltungsform kann also der Benutzer durch entsprechende Vorgabe selbst bestimmen, wann Winterbetrieb erfolgen soll und wann Sommerbetrieb erfolgen soll. D.h., er kann beispielsweise im Herbst das Umschalten auf den Winterbetrieb vornehmen, so dass dann über den gesamten Winter hinweg der Winterbetrieb mit der zusätzlichen Funktionalität des Heizgeräts als Zuheizer durchgeführt wird. Im Frühjahr kann der Benutzer dann wieder auf Sommerbetrieb umschalten, so dass dann über den Sommer hinweg die Zuheizerfunktionalität deaktiviert bleibt.

Zum Informationsaustausch kann vorgesehen sein, dass die Sommerbetrieb/Winterbetrieb-Vorgabebedieneinheit mit dem Ansteuergerät über eine Informationsübertragungsleitungsanordnung in Verbindung steht oder treten kann.

Um dabei den Aufbau möglichst einfach zu gestalten, gleichwohl auch in der Informationsübertragung eine möglichst hohe Funktionalität bereitstellen zu können, wird weiter vorgeschlagen, dass die Informationsübertragungsleitungsanordnung ein Bus-Leitungssystem umfasst, über welches im Wesentlichen alle Bedienbefehle zu dem Ansteuergerät übertragen werden. Über ein derartiges Bus-Leitungssystem können dann die Ansteuerbefehle in digitalisierter Art und Weise kodiert übertragen werden, so dass verschiedenste Befehle und Informationen auch in verschiedenen Übertragungsrichtungen über eine sehr geringe Anzahl an Datenleitungen gesandt werden können.

Weiter ist es möglich, dass die Informationsübertragungsleitungsanordnung eine Diagnoseleitung umfasst und dass der Sommerbetrieb-Betriebsbefehl und der Winterbetrieb-Betriebsbefehl über die Diagnoseleitung zu dem Ansteuergerät übertragen werden. Auf diese Art und Weise kann selbst dann, wenn die grundsätzliche Befehls- bzw. Informationsübertragung nicht über ein Bus-System erfolgt, ohne dem Bereitstellen einer zusätzlichen Leitung eine bereits bestehende Leitung, nämlich die Diagnoseleitung, genutzt werden, um diese Betriebsbefehle zu übertragen.

Weiter ist es selbstverständlich auch möglich, dass die Informationsübertragungsleitungsanordnung eine Sommerbetrieb-Betriebsbefehl/Winterbetrieb-Betriebsbefehl-Übertragungsleitung zur im Wesentlichen ausschließlichen Übertragung des Sommerbetrieb-Betriebsbefehls und des Winterbetrieb-Betriebsbefehls zu dem Ansteuergerät umfasst.

Gemäß einem weiteren Aspekt der vorliegenden Erfindung kann ein Außentemperaturfühler vorgesehen sein zur Erzeugung eines eine Außentemperatur repräsentierenden Außentemperatursignals, welches Außentemperatursignal wenigstens einen Teil der Sommerbetrieb/Winterbetrieb-Differenzierinformation bereitstellt. Die durch den Außentemperaturfühler erfassbare Außentemperatur kann ein wesentliches Kriterium dafür sein, ob Winterbetrieb oder Sommerbetrieb durchgeführt werden soll. Bei vergleichsweise niedrigen Außentemperaturen kann dann das Ansteuergerät das Heizgerät als Zuheizer betreiben, während dies bei höheren Außentemperaturen nicht erfolgen wird. Der Vorteil dieser Variante ist, dass auch in wärmeren Phasen im Winter, während welchen an sich die Zuheizerfunktion nicht erforderlich wäre, diese Funktion ohne Benutzerinteraktion unterdrückt werden kann und insofern auch Brennstoff eingespart werden kann.

Weiter kann bei dem erfindungsgemäßen System ein Kühlmitteltemperaturfühler zur Erzeugung eines eine Kühlmitteltemperatur repräsentierenden Kühlmitteltemperatursignals für das Ansteuergerät vorgesehen sein, wobei bei vorgegebenem Winterbetrieb das Ansteuergerät das Heizgerät nur dann als Zuheizer betreibt, wenn das Kühlmitteltemperatursignal darauf hindeutet, dass die Temperatur des Kühlmittels unter einer vorbestimmten Grenztemperatur liegt. Diese Weiterbildung des erfindungsgemäßen Systems gestattet es, den Zuheizbetrieb auch dann, wenn er bedingt durch die Vorgabe des Winterbetriebs eigentlich grundsätzlich erfolgen sollte, zu unterdrücken, wenn das Kühlmittel bereits eine ausreichende Temperatur aufweist. Dies kann beispielsweise der Fall sein, wenn die Brennkraftmaschine nur kurzzeitig außer Betrieb gesetzt worden ist und die Temperatur im Bereich des Kühlmittels noch nicht übermäßig stark abgefallen ist.

Bei dem erfindungsgemäßen System kann weiter vorgesehen sein, dass das Ansteuergerät dazu ausgebildet ist, das Heizgerät zum Betreiben desselben als Zuheizer beim Starten einer Brennkraftmaschine in Betrieb zu setzen. Dieses Inbetriebnehmen des Heizgeräts beim Starten der Brennkraftmaschine im Winterbetrieb, also das Betreiben des Heizgeräts als Zuheizer, kann so erfolgen, dass unmittelbar beim Starten der Brennkraftmaschine auch das Heizgerät in Betrieb gesetzt wird, oder dass hier nach einer vorbestimmten Wartezeit im Bereich von einigen Sekunden oder Minuten dann, z.B. dann, wenn nach dem Starten der Brennkraftmaschine das Bordspannungssystem wieder entlastet wird, das Heizgerät aktiviert wird, welches insbesondere in seiner Startphase ebenfalls ein Verbraucher elektrischer Energie ist.

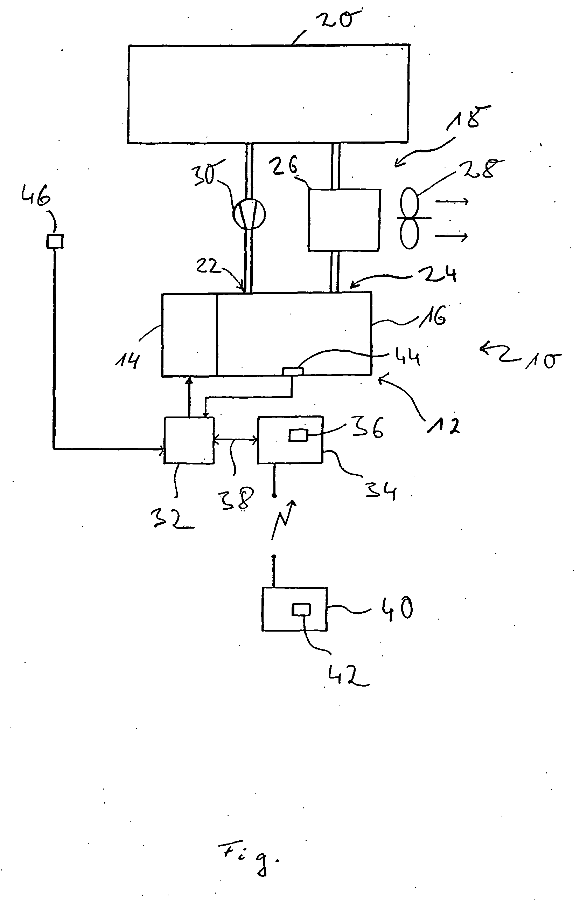

Die vorliegende Erfindung wird nachfolgend mit Bezug auf die beiliegende Figur detailliert beschrieben. Diese Figur zeigt in blockbildartiger Darstellung ein erfindungsgemäßes nachrüstbares bzw. hier bereits in ein Fahrzeug eingegliedertes Heizsystem.

Dieses in der Figur gezeigte Heizsystem 10 umfasst als wesentlichen Bestandbereich ein brennstoffbetriebenes Heizgerät 12. Dieses Heizgerät 12 weist eine beispielsweise als Verdampferbrenner, vorzugsweise schnellstartende Verdampferbrenner, ausgestaltete Brenneranordnung 14 auf. In diese wird flüssiger Brennstoff eingespeist, um dort zusammen mit der ebenfalls eingespeisten Verbrennungsluft ein zündfähiges und verbrennungsfähiges Brennstoff/Luft-Gemisch zu erzeugen. Dieses wird verbrannt, und die dabei entstehende Wärme wird in einer Wärmetauscheranordnung 16 auf ein zu erwärmendes Medium übertragen. Bei einem in ein Fahrzeug integrierten Heizsystem 10 ist diese Wärmetauscheranordnung 16 an einen allgemein mit 18 bezeichneten Kühlmittelkreislauf einer Brennkraftmaschine 20 angeschlossen. Hierzu weist die Wärmetauscheranordnung 16 Anschlussbereiche 22, 24 auf, über welche das im Kühlmittelkreislauf 18 zirkulierende Kühlmittel, also beispielsweise Wasser, in die Wärmetauscheranordnung 16 eingeleitet werden kann. Dieser Kühlmittelkreislauf 18 umfasst ferner einen in einem Fahrzeug im Allgemeinen bereits vorhandenen Wärmetauscher 26. Die im Betrieb der Brennkraftmaschine 20 auf das Kühlmittel übertragene Wärme kann auch bei nicht vorgesehenem erfindungsgemäßem Heizsystem 10 in diesem Wärmetauscher 26 auf die durch die Wirkung eines Gebläses 28 in einen Fahrzeuginnenraum einzuspeisende Luft übertragen werden.

Sofern bei einem Fahrzeug, in welches das erfindungsgemäße System 10 eingegliedert werden soll, keine geeignete Förderpumpe für das Kühlmittel vorhanden ist, um dieses im Kühlmittelkreislauf 18 zu fördern, kann das erfindungsgemäße nachzurüstende System eine derartige Kühlmittelpumpe 30 aufweisen, die auch unabhängig vom Betrieb der Brennkraftmaschine 20 betrieben werden kann, um einen Kühlmittelstrom durch die Wärmetauscheranordnung 16, den Wärmetauscher 26 und auch den Wärmeübertragungsbereich der Brennkraftmaschine 20 zu fördern.

Das erfindungsgemäße Heizsystem 10 umfasst ferner ein Ansteuergerät 32 für das Heizgerät 12. Dieses Ansteuergerät 32 erzeugt Befehle, die zu verschiedenen anzusteuernden Systembereichen des Heizgeräts 12 übertragen werden und auf diese Art und Weise den Betrieb des Heizgeräts 12 steuern. Diese Systembereiche können beispielsweise ein Zündorgan, eine die Verdampfung unterstützende elektrisch betreibbare Heizung, eine Dosierpumpe, ein Verbrennungsluftgebläse und dergleichen umfassen. Dem Ansteuergerät 32 ist bei dem in der Figur dargestellten Beispiel eines erfindungsgemäßen Heizsystems 10 ferner eine im Fahrzeug stationär anzubringende Bedieneinheit 34 zugeordnet. Diese Bedieneinheit 34 kann eine nur symbolhaft dargestellte Tastatur 36 aufweisen, welche durch einen Benutzer zu manipulieren, d.h. zu bedienen ist. Gemäß der Manipulation durch den Benutzer werden in der Bedieneinheit 34 Bedienbefehle erzeugt, die zum Ansteuergerät 32 übertragen werden und, wie im Folgenden noch beschrieben, darin zu Ansteuerbefehlen für das Heizgerät umgesetzt werden. Die Kommunikation zwischen der fahrzeugstationären Bedieneinheit 34 und dem Ansteuergerät 32 erfolgt über eine Signalleitungsanordnung 38.

Das System 10 kann ferner zumindest eine mobile Bedieneinheit 40 aufweisen, welche ebenfalls unter Einsatz einer Tastatur 42 durch einen Benutzer manipulierbar ist und dementsprechend Bedienbefehle erzeugt, die zunächst über Funk beispielsweise zur stationären Bedieneinheit 34 übertragen werden und dann über die Leitungsanordnung 38 zum Ansteuergerät 32 übertragen werden. Hier ist selbstverständlich auch eine direkte Funkkommunikation zwischen der Bedieneinheit 40 und dem Ansteuergerät 32 möglich. Beim Bereitstellen der mobilen Bedieneinheit 40 kann die stationäre Bedieneinheit 34 beispielsweise auch so ausgebildet sein, dass sie mit einer verminderten Funktionalität hinsichtlich der Benutzermanipulation ausgestaltet ist oder durch einen Benutzer praktisch gar nicht mehr manipuliert werden kann, sondern im Wesentlichen nur die Kommunikation zwischen der mobilen Bedieneinheit 40 und dem Ansteuergerät 34 bereitstellt. Das in der Figur gezeigte System 10 weist ferner zwei Temperatursensoren auf. Dies ist zum einen ein Kühlmitteltemperatursensor 44, der im Bereich der Wärmetauscheranordnung 16 vorgesehen ist und die Temperatur des im Kühlmittelkreislauf 18 zirkulierenden Kühlmittels erfassen kann. Der Kühlmitteltemperaturfühler 44 kann beispielsweise nahe dem Einlassbereich 22, nahe dem Auslassbereich 24 oder durch Bereithaltung mehrerer derartiger Fühler an verschiedenen Positionen zur Temperaturerfassung vorgesehen sein. Das von diesem Fühler 44 abgegebene Signal wird dem Ansteuergerät 32 zugeführt und kann somit eine Grundlage für die Ansteuerung des Heizgeräts 12 bilden.

Es kann ferner ein Außentemperaturfühler 46 vorgesehen sein. Dieser erfasst die Temperatur im Außenfeld eines Fahrzeugs und liefert ein entsprechendes Außentemperatursignal, das ebenfalls dem Ansteuergerät 32 zugeführt werden kann. Ein derartiger Außentemperaturfühler 46 ist im Allgemeinen bei Fahrzeugen bereits vorhanden, so dass bei bestehender Möglichkeit, das Ansteuergerät 32 beispielsweise an ein CAN-Bussystem des Fahrzeugs anzuschließen, auf diese Art und Weise das Außentemperatursignal des Fühlers 46 zum Ansteuergerät 32 gelangen kann. Es wäre aber auch denkbar, beim Eingliedern des Heizsystems 10 auch einen Außentemperaturfühler miteinzubauen, um dann dessen Funktionalität bzw. Signal nutzen zu können.

Durch das Nachrüsten eines Fahrzeugs mit dem erfindungsgemäßen Heizsystem 10, das also im Wesentlichen die Baugruppen Heizgerät 12, Ansteuergerät 32, zumindest eine der Bedieneinheiten 34, 40 und ggf. Kühlmittelpumpe 30 und Außentemperaturfühler 46 aufweist, wird es möglich, bei einem derartig ausgestatteten Fahrzeug einen Standheizbetrieb zu realisieren. D.h., es kann vor einer geplanten Inbetriebnahme des Fahrzeugs bzw. der Brennkraftmaschine 20 durch das Ansteuergerät 32 das Heizgerät 12 in Betrieb gesetzt werden, um auf diese Art und Weise das im Kreislauf 18 vorhandene Kühlmittel zu erwärmen und somit auch Wärme auf die in den Fahrzeuginnenraum dann eingeleitete Luft und auf die Brennkraftmaschine 20 zu übertragen. Hierzu kann beispielsweise der Benutzer über die Bedieneinheiten 34 und 40 einen Startzeitpunkt, ggf. auch die Betriebsdauer des Heizgeräts 12 nach diesem Startzeitpunkt programmieren, möglicherweise auch aufgelöst nach Wochentagen. Das Heizgerät 12 kann dann zum gegebenen Zeitpunkt eine vorbestimmte Zeitdauer vor der geplanten Nutzungsaufnahme in Betrieb gesetzt werden. Dabei kann das vom Kühlmitteltemperaturfühler 44 gelieferte Signal grundsätzlich auch dazu genutzt werden, den Betrieb des Heizgeräts 12 zu überwachen, beispielsweise dahingehend, ob eine Zündung erfolgt ist bzw. ob die Heizleistung angepasst werden muss. Wenn ein Außentemperaturfühler 46 vorgesehen ist bzw. dessen Signal im Ansteuergerät 32 genutzt werden kann, kann auch dieses einen Einfluss auf den Betrieb des Heizgeräts 12 nehmen. Wird beispielsweise erkannt, dass sehr niedrige Außentemperaturen vorliegen, so kann das Ansteuergerät 32 von selbst den Startzeitpunkt anpassen, um somit ggf. eine längere Vorheizperiode vorzugeben. Auf diese Art und Weise kann auch bei sehr niedrigen Außentemperaturen sichergestellt werden, dass der Innenraum des Fahrzeugs bei der geplanten Nutzungsaufnahme in gewünschter Weise konditioniert ist bzw. auch Scheiben und Spiegel abgetaut sind.

Gemäß der vorliegenden Erfindung soll das nachrüstbare Heizsystem 10 jedoch nicht nur dazu in der Lage sein, eine Funktion als Standheizung zum Vorkonditionieren eines Fahrzeugs zu erfüllen. Vielmehr soll das System 10 auch in einem Zuheizermodus betrieben werden können. In diesem Zuheizermodus wird in der Startphase der Brennkraftmaschine 20 das Heizgerät 12 durch die Ansteuerung des Ansteuergeräts 32 in Betrieb gesetzt, um die Brennkraftmaschine 20 beschleunigt erwärmen zu können bzw. in dieser Startphase, in welcher die Brennkraftmaschine 20 selbst noch nicht ausreichend Wärme zur Verfügung stellt, die in den Fahrzeuginnenraum einzuleitende Luft verstärkt erwärmen zu können. Hierzu empfängt das Ansteuergerät 32 zusätzlich die Information, dass die Brennkraftmaschine 30 in Betrieb gesetzt wird oder worden ist. Diese Information kann auf der Grundlage verschiedener Signale bereitgestellt werden. So könnten beispielsweise die Signale von Drehzahlmessern als Indikator für den Betrieb der Brennkraftmaschine ausgewertet werden, ebenso wie selbstverständlich beim Starten oder in der Betriebsphase einer Brennkraftmaschine 20 im Bordnetzsystem vorhandene und auf den Betrieb hinweisende Signale, beispielsweise das so genannte D+-Signal.

Gemäß einem weiteren Erfindungsaspekt soll jedoch dahingehend differenziert werden können, ob der Betrieb als Zuheizer überhaupt erforderlich ist oder nicht. Im Sommer, also bei vergleichsweise hohen Außentemperaturen von beispielsweise über 10°C, wird dieser Betrieb nicht erforderlich sein und lediglich zu einem erhöhten Brennstoffverbrauch führen. Liegen die Temperaturen beispielsweise unter 10°C, so kann einerseits hinsichtlich der Schadstoffemission der Brennkraftmaschine 20 und andererseits hinsichtlich der beschleunigten Erwärmung des Fahrzeuginnenraums ein derartiger Zuheizerbetrieb erforderlich oder gewünscht sein. Es ist daher erfindungsgemäß weiter vorgesehen, dass dem Ansteuergerät 32 Information zugeführt wird, die die Differenzierung zwischen Sommerbetrieb, also einem Betrieb ohne Zuheizerfunktion, und Winterbetrieb, also einem Betrieb mit Zuheizerfunktion, gestattet. Beispielsweise könnte hierzu wieder das Signal des Außentemperaturfühlers 46 ausgewertet werden. Weist dieses Signal darauf hin, dass eine vergleichsweise niedrige Außentemperatur vorliegt, so kann dies in dem Ansteuergerät 32 dazu genutzt werden, grundsätzlich den Zuheizerbetrieb freizugeben, und jedes mal dann, wenn die Brennkraftmaschine 20 gestartet wird und eine dies indizierende Information in das Ansteuergerät 32 eingeleitet, wird das Heizgerät 12 als Zuheizer in Betrieb genommen. Dieser Zuheizerbetrieb kann dann für eine vorbestimmte Zeitdauer durchgeführt werden oder kann durchgeführt werden, bis die Temperatur des im Kreislauf 18 zirkulierenden Kühlmittels eine vorbestimmte Temperatur beispielsweise im Bereich von 85°C erreicht hat. Bei Erreichen dieser Temperatur kann beispielsweise die Heizleistung des Heizgeräts 12 bzw. der Brenneranordnung 14 desselben allmählich heruntergefahren werden. Wird bei diesem Herunterfahren erkannt, dass auch die Temperatur des Kühlmittels im Kreislauf 18 wieder stärker abfällt, so kann selbstverständlich dann wieder eine Erhöhung der Heizleistung im Zuheizerbetrieb stattfinden, da dies ein Hinweis darauf ist, dass in der Brennkraftmaschine 20 noch nicht ausreichend Wärme bereitgestellt wird.

Durch das Ausnutzen des vom Außentemperaturfühler 46 gelieferten Signals kann also in automatisierter Weise, ohne dass eine Manipulation oder Vorgabe durch den Benutzer erforderlich wäre, zwischen Sommerbetrieb und Winterbetrieb umgeschaltet werden.

Eine alternative Möglichkeit besteht darin, entweder in einer der Bedieneinheiten 34, 42 oder im Ansteuergerät 32 selbst eine Uhr bzw. eine Kalenderinformation bereitzuhalten, so dass beispielsweise gekoppelt an bestimmte Tage übergegangen wird vom Sommerbetrieb auf den Winterbetrieb bzw. vom Winterbetrieb auf den Sommerbetrieb. Hier könnte beispielsweise auch vorgesehen sein, dass der Benutzer unter Einsatz der Bedieneinheiten 34 bzw. 40 vorgibt, an welchem Tag der Übergang in den Winterbetrieb sein soll und an welchem Tag der Übergang in den Sommerbetrieb sein soll. Wird diese Information dann im Ansteuergerät 32 abgelegt, so kann dieses selbsttätig den Übergang zwischen den Betriebsarten vollziehen. Wird diese Information in den Bedieneinheiten 34 bzw. 40 abgelegt, so können diese zum gegebenen Zeitpunkt dann jeweils einen Bedienbefehl erzeugen, der im Ansteuergerät 32 als zwischen Sommerbetrieb und Winterbetrieb differenzierende Information zum Umschalten zwischen den Betriebsarten genutzt wird.

Eine weitere Möglichkeit, zwischen Sommerbetrieb und Winterbetrieb umzuschalten, besteht darin, dass der Benutzer unter Einsatz der Bedieneinheiten 34 bzw. 40 das Umschalten befiehlt. So kann beispielsweise an diesen Bedieneinheiten ein hierfür speziell vorgesehener Schalter oder eine Schalterkombination vorgesehen sein, deren Betätigung dann zur Erzeugung eines entsprechenden Bedienbefehls führt, der in dem Ansteuergerät 32 dann wiederum das Umschalten von Sommerbetrieb auf Winterbetrieb oder umgekehrt auslöst. Bei menügeführter Betätigung der Bedieneinheiten 34, 40 kann eine entsprechende Funktion durch Bereithalten eines Menüpunkts "Sommerbetrieb" bzw. "Winterbetrieb" und Auswahl der gewünschten Betriebsart erfolgen.

Durch die erfindungsgemäß vorzusehende Möglichkeit, zwischen Sommerbetrieb und Winterbetrieb zu differenzieren bzw. für das Ansteuergerät 32 entsprechende Information vorzusehen bzw. darin auch bereitzuhalten, kann die Funktionalität des Heizsystems 10, welches bisher lediglich als Standheizung zu betreiben war, erweitert werden auf die Zuheizerfunktion. Gleichwohl wird eine an sich unnötige Zuheizerfunktion, nämlich dann, wenn vergleichsweise hohe Außentemperaturen vorliegen, vermieden.

Bei dem erfindungsgemäßen System 10 kann ferner vorgesehen sein, dass auch zum Betreiben des Heizgeräts 12 als Zuheizer das Signal des Kühlmitteltemperaturfühlers 44 ausgewertet wird. Ist nämlich an sich der Zuheizerbetrieb freigegeben, also liegt für das Ansteuergerät 32 Information vor, welche einen Winterbetrieb und somit auch die Zuheizerfunktion fordert, so kann durch Auswertung des Signals des Fühlers 44 festgestellt werden, ob trotz gewünschtem Winterbetrieb das Betreiben des Heizgeräts 12 als Zuheizer beim Starten der Brennkraftmaschine 20 überhaupt erforderlich ist. Wird nämlich die Brennkraftmaschine 20 nach längerer Betriebsdauer kurzzeitig abgestellt und beispielsweise nach einigen Sekunden oder Minuten wieder in Betrieb genommen, so kann davon ausgegangen werden, dass die Temperatur im Bereich der Brennkraftmaschine 20 und auch die Temperatur des Kühlmittels noch vergleichsweise hoch ist. In diesem Falle wäre dann ein Betrieb des Heizgeräts 12 als Zuheizer grundsätzlich nicht erforderlich. Es kann also hier beispielsweise eine Schwellentemperatur vorgegeben werden, die unter der Solltemperatur des Kühlmittels liegt. Deutet das Signal des Fühlers 44 darauf hin, dass das Kühlmittel 18 eine Temperatur unter dieser Schwellentemperatur aufweist, so wird beim Starten der Brennkraftmaschine 20 bzw. nach dem Starten der Brennkraftmaschine 20 das Heizgerät 12 als Zuheizer in Betrieb gesetzt. Ist jedoch die Temperatur gemäß der Ausgabe des Kühlmitteltemperaturfühlers 44 über der Schwellentemperatur, also ausreichend hoch, so kann auf das Betreiben des Heizgeräts 12 auch beim Starten der Brennkraftmaschine 20 verzichtet werden. Diese Differenzierung auf der Grundlage der Temperatur des Kühlmittels ist jedoch nur daher sinnvoll und möglich, da erfindungsgemäß zwischen Winterbetrieb und Sommerbetrieb differenziert wird. Wäre diese Differenzierung nicht vorgesehen, so würde auch im Sommerbetrieb, nämlich im Kaltstartzustand der Brennkraftmaschine 20, selbstverständlich die Temperatur unter der Schwellentemperatur liegen und somit das Heizgerät 12 als Zuheizer in Betrieb genommen werden.

Der Informationsaustausch zwischen dem Ansteuergerät 32 und insbesondere der fahrzeugstationären Bedieneinheit 34 über die Leitunganordnung 38 kann auf verschiedene Weise erfolgen. So kann beispielsweise diese Leitungsanordnung 38 als Bus-System ausgestaltet werden, über welche dann die zwischen dem Ansteuergerät 32 und der Bedieneinheit 44 auszutauschenden Informationen in Form digitaler Signale übertragen wird. Gleichwohl ist es auch möglich, bei Einsatz herkömmlicher Leitungsverbindungen für die Übertragung des Signals, welches zwischen Sommerbetrieb und Winterbetrieb differenziert, eine eigene Leitungsverbindung bereitzustellen, über die im Wesentlichen nur dieses Signal übertragen wird. Auch ist es möglich, die bei derartigen Leitungssystemen im Allgemeinen dann vorhandene Diagnoseleitung zwischen dem Ansteuergerät 32 und der Bedieneinheit 34 dazu zu nutzen, die zwischen Sommerbetrieb und Winterbetrieb zu differenzierenden Signale zu übertragen.

## Patentansprüche

1. Nachrüstheizsystem für ein Fahrzeug, umfassend:
- ein Heizgerät (12) mit einer Brenneranordnung (14) und einer Wärmetauscheranordnung (16), wobei die Wärmetauscheranordnung (16) Anschlussbereiche (22, 24) zum Anschließen derselben an einen Kühlmittelkreislauf (18) einer Brennkraftmaschine (20) aufweist,
- ein Ansteuergerät (32) für das Heizgerät (12),
- wenigstens eine Bedieneinheit (34, 40), in welcher gemäß einer Benutzermanipulation Bedienbefehle generiert werden und welche zur Übertragung von Bedienbefehlen in Kontakt mit dem Ansteuergerät (32) ist oder treten kann, wobei das Ansteuergerät (32) dazu ausgebildet ist, das Heizgerät (12) auf der Grundlage der Bedienbefehle als Standheizung zu betreiben,
- eine Sommerbetrieb/Winterbetrieb-Differenzieranordnung (40; 46), welche dem Ansteuergerät (32) zuführbare Sommerbetrieb/Winterbetrieb-Differenzierinformation bereitstellt,
wobei das Ansteuergerät (32) ferner dazu ausgebildet ist, dann, wenn die Sommerbetrieb/Winterbetrieb-Differenzierinformation auf Winterbetrieb hindeutet, das Heizgerät (12) als Zuheizer zu betreiben, und dann, wenn die Sommerbetrieb/Winterbetrieb-Differenzierinformation auf Sommerbetrieb hindeutet, das Heizgerät (12) nicht als Zuheizer zu betreiben.

2. Nachrüstheizsystem nach Anspruch 1,
**dadurch gekennzeichnet, dass** die SommerbetrieblWinterbetrieb-Differenzieranordnung (34, 40) wenigstens eine Bedieneinheit (34, 40) als Sommerbetrieb/Winterbetrieb-Vorgabebedieneinheit (34, 40) umfasst, welche eine benutzermanipulierbare Sommerbetrieb/Winterbetrieb-Umschaltanordnung (36, 42) aufweist und zum Erzeugen eines Sommerbetrieb-Betriebsbefehls und eines Winterbetrieb-Betriebsbefehls ausgebildet ist.

3. Nachrüstheizsystem nach Anspruch 2,
**dadurch gekennzeichnet, dass** die Sommerbetrieb/Winterbetrieb-Vorgabebedieneinheit (34, 40) mit dem Ansteuergerät (32) über eine Informationsübertragungsleitungsanordnung (38) in Verbindung steht oder treten kann.

4. Nachrüstheizsystem nach Anspruch 3,
**dadurch gekennzeichnet, dass** die Informationsübertragungsleitungsanordnung (38) ein Bus-Leitungssystem umfasst, über welches im Wesentlichen alle Bedienbefehle zu dem Ansteuergerät (32) übertragen werden.

5. Nachrüstheizsystem nach Anspruch 3 oder 4,
**dadurch gekennzeichnet, dass** die Informationsübertragungsleitungsanordnung (38) eine Diagnoseleitung umfasst und dass der-Sommerbetrieb-Betriebsbefehl und der Winterbetrieb-Betriebsbefehl über die Diagnoseleitung zu dem Ansteuergerät (32) übertragen werden.

6. Nachrüstheizsystem nach Anspruch 3 oder 4,
**dadurch gekennzeichnet, dass** die Informationsübertragungsleitungsanordnung (38) eine Sommerbetrieb-Betriebsbefehl/Winterbetrieb-Betriebsbefehl-Übertragungsleitung zur im Wesentlichen ausschließlichen Übertragung des Sommerbetrieb-Betriebsbefehls und des Winterbetrieb-Betriebsbefehls zu dem Ansteuergerät umfasst.

7. Nachrüstheizsystem nach einem der Ansprüche 1 bis 6,
**gekennzeichnet durch** einen Außentemperaturfühler (46) zur Erzeugung eines eine Außentemperatur repräsentierenden Außentemperatursignals, welches Außentemperatursignal wenigstens einen Teil der Sommerbetrieb/Winterbetrieb-Differenzierinformation bereitstellt.

8. Nachrüstheizsystem nach einem der Ansprüche 1 bis 7,
**gekennzeichnet durch** einen Kühlmitteltemperaturfühler (44) zur Erzeugung eines eine Kühlmitteltemperatur repräsentierenden Kühlmitteltemperatursignals für das Ansteuergerät (32), wobei bei vorgegebenem Winterbetrieb das Ansteuergerät (34) das Heizgerät (12) nur dann als Zuheizer betreibt, wenn das Kühlmitteltemperatursignal darauf hindeutet, dass die Temperatur des Kühlmittels unter einer vorbestimmten Grenztemperatur liegt.

9. Nachrüstheizsystem nach einem der Ansprüche 1 bis 8,
**dadurch gekennzeichnet, dass** das Ansteuergerät (32) dazu ausgebildet ist, das Heizgerät (12) zum Betreiben desselben als Zuheizer beim Starten einer Brennkraftmaschine (20) in Betrieb zu setzen.

## Claims

1. A retrofit heating system for a vehicle, comprising
- a heating appliance (12) with a burner assembly (14) and a heat-exchanger assembly (16), wherein the heat-exchanger assembly (16) has connection zones (22,24) for connecting the latter to a coolant circuit (18) of an internal-combustion engine (20),
- an activating device (32) for the heating appliance (12),
- at least one control unit (34,40) in which in accordance with user control operating commands are generated and which, for the transmission of operating commands, is or can come into contact with the activating device (32), wherein the activating device (32) is designed to operate the heating appliance (12) on the basis of the operating commands as a stationary heater,
- a summer operation/winter operation differentiating assembly (40;46) which provides summer operation/winter operation differentiating data which can be fed to the activating device (32),
wherein the activating device (32) is further designed so that, when the summer operation/winter operation differentiating data is indicative of winter operation, the heating appliance (12) is operated as an auxiliary heater, and when the summer operation/winter operation differentiating data is indicative of summer operation, the heating appliance (12) is not operated as an auxiliary heater.

2. A retrofit heating system according to Claim 1, **characterised in that** the summer operation/winter operation differentiating assembly (34,40) comprises at least one control unit (34,40) as a summer operation/winter operation default control unit (34,40) which has a summer operation/winter operation switch-over assembly (36,42) which can be user-manipulated and which is designed to generate a summer operation control command and a winter operation control command.

3. A retrofit heating system according to Claim 2, **characterised in that** the summer operation/winter operation default control unit (34,40) is or can come into communication with the activating device (32) via an data-transmission line assembly (38).

4. A retrofit heating system according to Claim 3, **characterised in that** the data-transmission line assembly (38) comprises a bus line system via which substantially all the operating commands are transmitted to the activating device (32).

5. A retrofit heating system according to Claim 3 or 4, **characterised in that** the data-transmission line assembly (38) comprises a diagnostic line, and **in that** the summer operation command and the winter operation command are transmitted via the diagnostic line to the activating device (32).

6. A retrofit heating system according to Claim 3 or 4, **characterised in that** the data-transmission line assembly (38) comprises a summer operation/winter operation operating command transmission line for the essentially exclusive transmission of the summer operation operating command and of the winter operation operating command to the activating device.

7. A retrofit heating system according to any one of Claims 1 to 6, **characterised by** an outside temperature sensor (46) for generating an outside temperature signal representing an outside temperature, which outside temperature signal provides at least part of the summer operation/winter operation differentiating data.

8. A retrofit heating system according to any one of Claims 1 to 7, **characterised by** a coolant temperature sensor (44) for generating a coolant temperature signal for the activating device (32) representing a coolant temperature, wherein during predetermined winter operation the activating device (34) operates the heating appliance (12) as an auxiliary heating only when the coolant temperature signal indicates that the coolant temperature is below a predetermined limit temperature.

9. A retrofit heating system according to any one Claims 1 to 8, **characterised in that** the activating device (32) is designed to start up the heating appliance (12) so as to operate it as an auxiliary heater when starting an internal-combustion engine (20).

## Revendications

1. Système de chauffage complémentaire pour un véhicule, comportant :
- un appareil de chauffage (12) avec un système de brûleurs (14) et un échangeur thermique (16), l'échangeur thermique (16) comportant des zones de branchement (22, 24) en vue de le raccorder à un circuit de fluide de refroidissement (18) d'un moteur à combustion interne (20),
- un dispositif d'activation (32) pour l'appareil de chauffage (12),
- au moins une unité de commande (34, 40), dans laquelle sont générées des instructions de commande en fonction d'une manipulation de l'utilisateur et laquelle est en contact ou peut entrer en contact avec le dispositif d'activation (32) pour transmettre les instructions de commande, le dispositif d'activation (32) étant conçu pour faire fonctionner l'appareil de chauffage (12) en tant que chauffage auxiliaire sur la base des instructions de commande,
- un dispositif de différenciation entre le mode été et le mode hiver (40 ; 46), qui met à disposition du dispositif d'activation (32) une information de différenciation entre le mode été et le mode hiver qui peut être transmise,
dans lequel système de chauffage le dispositif d'activation (32) est conçu en outre de manière à faire fonctionner l'appareil de chauffage (12) comme chauffage auxiliaire lorsque l'information de différenciation entre le mode été et le mode hiver signale le mode hiver et à ne pas mettre en service l'appareil de chauffage (12) comme chauffage auxiliaire lorsque l'information de différenciation entre le mode été et le mode hiver signale le mode été.

2. Système de chauffage complémentaire selon la revendication 1, **caractérisé en ce que** le dispositif de différenciation entre le mode été et le mode hiver (34, 40) comporte au moins une unité de commande (34, 40) sous forme d'unité de commande de définition du mode été et du mode hiver (34, 40), qui comporte un dispositif de commutation entre le mode été et le mode hiver (36, 42) apte à être manipulé par l'utilisateur et qui est conçue pour générer une instruction de commande en mode été et une instruction de commande en mode hiver.

3. Système de chauffage complémentaire selon la revendication 2, **caractérisé en ce que** l'unité de commande de définition du mode été et du mode hiver (34, 40) est en liaison ou peut entrer en liaison avec le dispositif d'activation (32) par l'intermédiaire d'un système de ligne de transmission d'information (38).

4. Système de chauffage complémentaire selon la revendication 3, **caractérisé en ce que** le système de ligne de transmission d'information (38) comporte un système de ligne de bus, par l'intermédiaire duquel sensiblement toutes les instructions de commande sont transmises vers le dispositif d'activation (32).

5. Système de chauffage complémentaire selon la revendication 3 ou 4, **caractérisé en ce que** le système de ligne de transmission d'information (38) comporte une ligne de diagnostic et **en ce que** l'instruction de commande en mode été et l'instruction de commande en mode hiver sont transmises via la ligne de diagnostic vers le dispositif d'activation (32).

6. Système de chauffage complémentaire selon la revendication 3 ou 4, **caractérisé en ce que** le système de ligne de transmission d'information (38) comporte une ligne de transmission de l'instruction de commande en mode été et de l'instruction de commande en mode hiver pour une transmission sensiblement exclusive de l'instruction de commande en mode été et de l'instruction de commande en mode hiver vers le dispositif d'activation (32).

7. Système de chauffage complémentaire selon l'une des revendications 1 à 6, **caractérisé par** un capteur de température extérieure (46) pour générer un signal de température extérieure représentant la température extérieure, lequel signal de température extérieure délivre au moins une partie de l'information de différenciation entre le mode été et le mode hiver.

8. Système de chauffage complémentaire selon l'une des revendications 1 à 7, **caractérisé par** un capteur de température du fluide de refroidissement (44) destiné à délivrer au dispositif d'activation (32) un signal de température du fluide de refroidissement représentant la température du fluide de refroidissement, sachant que dans un mode hiver prédéfini, le dispositif d'activation (32) met en service l'appareil de chauffage (12) uniquement lorsque le signal de température du fluide de refroidissement signale que la température du fluide de refroidissement est inférieure à une température limite prédéterminée.

9. Système de chauffage complémentaire selon l'une des revendications 1 à 8, **caractérisé en ce que** le dispositif d'activation (32) est conçu pour mettre en service l'appareil de chauffage (12) pour faire fonctionner celui-ci comme chauffage auxiliaire lors du démarrage d'un moteur à combustion interne (20).
